(19)

**Europäisches Patentamt**
**European Patent Office**
**Office européen des brevets**

(11) **EP 1 074 855 B1**

(12) **EUROPÄISCHE PATENTSCHRIFT**

(45) Veröffentlichungstag und Bekanntmachung des Hinweises auf die Patenterteilung:
**26.11.2008   Patentblatt 2008/48**

(51) Int Cl.:
*G01S 17/10* *(2006.01)*     *G01S 17/36* *(2006.01)*

(21) Anmeldenummer: **00116357.5**

(22) Anmeldetag: **28.07.2000**

(54) **Verfahren zur Enfernungsmessung**

Method of distance measurement

Méthode de télémétrie

(84) Benannte Vertragsstaaten:
**CH DE FI FR IT LI**

(30) Priorität: **05.08.1999   DE 19936954**

(43) Veröffentlichungstag der Anmeldung:
**07.02.2001   Patentblatt 2001/06**

(73) Patentinhaber: **Leuze electronic GmbH + Co. KG**
**73277 Owen/Teck (DE)**

(72) Erfinder: **Moll, Georg**
**72655 Altdorf (DE)**

(74) Vertreter: **Ruckh, Rainer Gerhard**
**Fabrikstrasse 18**
**73277 Owen/Teck (DE)**

(56) Entgegenhaltungen:
| | |
|---|---|
| **EP-A- 0 502 388** | **DE-A- 2 852 504** |
| **DE-A- 4 436 447** | **DE-C- 4 027 990** |
| **US-A- 2 946 050** | **US-A- 2 981 942** |
| **US-A- 3 503 680** | |

EP 1 074 855 B1

## Beschreibung

Die Erfindung betrifft ein Verfahren zur Entfernungsmessung gemäß dem Oberbegriff des Anspruchs 1 sowie eine Vorrichtung zur Durchführung des Verfahrens gemäß dem Oberbegriff des Anspruchs 10.

Eine derartige Vorrichtung zur Entfernungsmessung ist aus der DE 4027990 C1 bekannt. Diese Vorrichtung weist als Sender einen CW-modulierten Halbleiterlaser auf. Die Modulation ist so gewählt, daß der Sender mit einer Modulationsfrequenz $f_1$ periodisch rechtförmige Sendelichtimpulse emittiert. Die Entfernungsmessung erfolgt nach dem Phasenmeßprinzip. Zur Bestimmung der Phasenverschiebung zwischen den von Sendern emittierten Sendelichtimpulsen und den von einem Objekt auf den Empfänger zurückreflektierten Empfangslichtimpulsen ist ein phasenempfindlicher Gleichrichter vorgesehen. Dabei besteht der phasenempfindliche Gleichrichter aus zwei Synchrongleichrichtern, wobei einer der Synchrongleichrichter direkt und der zweite Synchrongleichrichter um 90° phasenversetzt mit der Modulationsfrequenz $f_1$ angesteuert werden. Das Ausgangssignal am ersten Synchrongleichrichter ist proportional zum Cosinus des Winkels der Phasenverschiebung, während das Ausgangssignal am zweiten Synchrongleichrichter proportional zum Sinus des Winkels der Phasenverschiebung ist. Durch Dividieren der Ausgangssignale wird der Tangens des Winkels der Phasenverschiebung berechnet und schließlich durch Bilden der Umkehrfunktion der Winkel der Phasenverschiebung selbst ermittelt.

Nachteilig hierbei ist, daß der Meßbereich auf Laufzeitdifferenzen von maximal $T=1/f_1$ begrenzt ist, da nur innerhalb dieses Bereichs der Winkel der Phasenverschiebung ein eindeutiges Maß für die Entfernung eines Objekts liefert.

Um den Meßbereich zu erweitern wird das Sendesignal des Senders nach einer bestimmten Anzahl $m_1$ von Perioden der primären Modulationsfrequenz $f_1$ für die Dauer von einer bestimmten Anzahl $m_2$ dieser Perioden unterbrochen. Während dieser Zeitintervalle werden durch Analogschaltkreise zwei integrierende Verstärker mit den Ausgängen der Synchrongleichrichter verbunden.

Dieses Unterbrechen des Sendesignals des Senders entspricht im wesentlichen der Modulation der Sendelichtimpulse mit einer zweiten Frequenz $f_2$, welche kleiner als $f_1$ ist. Dadurch wird eine Erweiterung des Meßbereichs erzielt, wobei die Größe des Meßbereichs durch das Verhältnis der Modulationsfrequenzen $f_1$ und $f_2$ vorgegeben ist.

Nachteilig hierbei ist zum einen, daß der Meßbereich nicht beliebig erweiterbar ist, sondern durch das Verhältnis der Modulationsfrequenzen $f_1$ und $f_2$ nach wie vor begrenzt ist. Zudem ist nachteilig, daß die Vergrößerung des Meßbereichs eine erhebliche Vergrößerung der Meßzeit bedingt oder nur noch ein geringer Bruchteil der Meßzeit für die Messung mit der größeren Modulationsfrequenz $f_1$ verbleibt, wodurch die Meßgenauigkeit vermindert wird.

Zudem ist nachteilig, daß die Ermittlung des Winkels der Phasenverschiebung durch eine analoge Signalverarbeitung erfolgt. Die Ermittlung des Winkels der Phasenverschiebung aus dem Sinus und Cosinus des Winkels über eine Division zur Bildung des Tangens und die anschließende Ermittlung der Umkehrfunktion arctan erfordert einen erheblichen Rechenaufwand. Zudem ist die erzielbare Auflösung selbst bei gutem Signal-/Rauschverhältnis von der Modulationsfrequenz abhängig, welche maßgeblich die zur Verfügung stehende Meßzeit begrenzt.

Der Erfindung liegt die Aufgabe zugrunde, bei geringer Meßzeit eine möglichst genaue Entfernungsmessung sowohl bei geringen als auch bei großen Objektdistanzen zu gewährleisten.

Zur Lösung dieser Aufgabe sind die Merkmale der Ansprüche 1 und 10 vorgesehen. Vorteilhafte Ausführungsformen und zweckmäßige Weiterbildungen der Erfindung sind in den Unteransprüchen beschrieben.

Bei der erfindungsgemäßen Vorrichtung wird zur Bestimmung der Entfernung eines Objektes die Phasenverschiebung zwischen den Sende- und Empfangslichtimpulsen ausgewertet. Entsprechend der Pulsfrequenz f, mit welcher die Sendelichtimpulse emittiert werden, können damit Laufzeiten $t_P$ der Sendelichtimpulse erfaßt werden, welche maximal dem Wert der Periodendauer $T=1/f$ entsprechen.

Um den Meßbereich auf Lichtlaufzeiten, die größer als die Periodendauer T sind, auszuweiten, wird zusätzlich zur Bestimmung der Phasenverschiebung die Emission der Sendelichtimpulse für ein vorgegebenes Zeitintervall $\Delta t$ unterbrochen, wobei in diesem Zeitintervall $\Delta t$ die Anzahl N der auftreffenden Empfangslichtimpulse gezählt werden. Da entsprechend der Pulsfrequenz f die einzelnen Empfangslichtimpulse in Zeitintervallen, die gleich der Periodendauer $T=1/f$ sind, auf den Empfänger auftreffen, ergibt sich aus der Anzahl N der registrierten Empfangslichtimpulse eine zusätzliche Lichtlaufzeit von $t_N=N \cdot T$.

Die gesamte Lichtlaufzeit $t_L$ der Sendelichtimpulse von der Vorrichtung zu einem Objekt ist dann durch die Summe $t_L = \frac{1}{2}\,(t_P + t_N)$ gebildet. Die Distanz des Objekts der Vorrichtung ergibt sich dann durch Multiplikation von $t_L$ mit der Lichtgeschwindigkeit.

Ein wesentlicher Vorteil der erfindungsgemäßen Entfernungsmessung ist darin zu sehen, daß durch eine geeignete Wahl des Zeitintervalls $\Delta t$ der Meßbereich nahezu beliebig erweiterbar ist. Durch die Kombination der Phasenmessung mit dem Zählen der Empfangslichtimpulse innerhalb von $\Delta t$ ist somit bei kurzer Meßzeit eine genaue Entfernungsmessung sowohl bei sehr kleinen als auch bei großen Distanzen möglich.

Weiterhin ist vorteilhaft, daß die Entfernungsmessung mit geringem Rechenaufwand durchgeführt werden kann, wobei zur Auswertung der Signale am Empfänger eine digitale Schaltungsanordnung verwendet werden kann. Damit treten im Gegensatz zu einer analogen Signalverarbeitung keine systembedingten Fehlerquellen, wie zum Beispiel Driften von Bauelementen und Offsetspannungen, auf.

Die Erfindung wird im nachstehenden anhand der Zeichnungen erläutert. Es zeigen

Figur 1:      Blockschaltbild eines Ausführungsbeispiels der erfindungsgemäßen Vorrichtung,

Figur 2:      Impulsdiagramme für Komponenten der Vorrichtung gemäß Figur 1,

Figur 3:      Ausschnitt aus den Impulsdiagrammen gemäß Figur 2

         a) für einen ersten Wert der Phasenverschiebung zwischen Sende- und Empfangslichtimpulsen,
         b) für einen zweiten Wert der Phasenverschiebung zwischen Sende- und Empfangslichtimpulsen

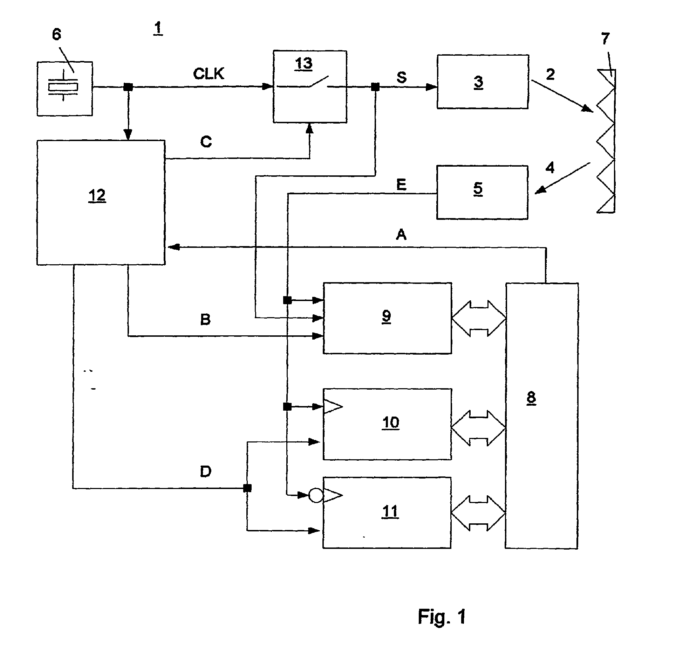

         Signalverläufe von Komponenten der Vorrichtung gemäß Figur 1 zur Bestimmung von Lichtlaufzeiten in Abhängigkeit der Phasenverschiebung zwischen Sende- und Empfangslichtimpulsen werden schematisch erläutert.

Figur 1 zeigt ein Ausführungsbeispiel einer Vorrichtung zur Entfernungsmessung. Die Vorrichtung ist als optischer Distanzsensor 1 ausgebildet und weist einen Sendelichtimpulse 2 emittierenden Sender 3 sowie einen Empfangslichtimpulse 4 empfangenden Empfänger 5 auf. Der Sender 3 besteht vorzugsweise aus einer Laserdiode, der Empfänger 5 aus einer pin-Photodiode oder dergleichen.

Die Vorgabe der Pulsfrequenz f der Sendelichtimpulse 2 erfolgt über einen an den Sender 3 angeschlossenen Oszillator 6. Dabei wird vom Oszillator 6 ein Taktsignal CLK mit Taktfrequenz 2f an den Sender 3 ausgegeben.

Zur Bestimmung der Distanz eines Objekts, welches, wie in Figur 1 dargestellt, von einem Reflektor 7 gebildet sein kann, wird die Lichtlaufzeit der vom Sender 3 emittierten Sendelichtimpulse 2 und der vom Objekt zur Vorrichtung zurückreflektierten Empfangslichtimpulse 4 ausgewertet.

Zur Auswertung der am Ausgang des Empfängers 5 anstehenden Empfangssignale ist eine Auswerteeinheit 8 vorgesehen, welche vorzugsweise von einem Microcontroller gebildet ist.

An die Auswerteeinheit 8 ist eine Meßeinheit 9 zur Bestimmung der Phasenverschiebung der Sende- 2 und Empfangslichtimpulse 4 angeschlossen. Diese Meßeinheit 9 ist im vorliegenden Ausführungsbeispiel von einem Time-to-Digital Converter gebildet. Auf jeweils einen Eingang des Time-to-Digital Converters sind die Sendesignale S zur Ansteuerung des Senders 3 sowie die Empfangssignale E am Ausgang des Empfängers 5 geführt.

Zudem sind an die Auswerteeinheit 8 zwei Zähler 10, 11 angeschlossen. Dabei sind auf jeweils einen Eingang eines Zählers 10, 11 die Empfangssignale des Empfängers 5 geführt. Mit dem ersten Zähler 10 werden die steigenden Flanken der Empfangslichtimpulse 4, mit dem zweiten Zähler 11 die fallenden Flanken der Empfangslichtimpulse 4 gezählt.

Schließlich ist eine Steuereinheit 12 an die Auswerteeinheit 8 angeschlossen, wobei über die Auswerteeinheit 8 ein erstes binäres Steuersignal A an die Steuereinheit 12 ausgebbar ist. Die Steuereinheit 12 ist von einer Logikschaltungsanordnung gebildet und steuert die zeitliche Abfolge der Signalauswertung.

Hierzu ist die Steuereinheit 12 jeweils an die beiden Zähler 10, 11, sowie an den Time-to-Digital Converter angeschlossen. Zudem ist die Steuereinheit 12 an einen Schalter 13 angeschlossen, der zwischen den Oszillator 6 und den Sender 3 geschaltet ist. Durch Betätigen des Schalters 13 ist der Sender 3 deaktivierbar.

Über ein von der Steuereinheit 12 ausgegebenes binäres Steuersignal B ist der Time-to-Digital Converter aktivierbar. Zudem sind die Zähler 10, 11 über die Steuereinheit 12 aktivierbar, wobei hierzu ein binäres Steuersignal D von der Steuereinheit 12 in die Zähler 10, 11 eingelesen wird. Schließlich wird der Schalter 13 über das von der Steuereinheit 12 ausgegebene binäre Steuersignal C betätigt.

Die Steuereinheit 12 selbst wird mit der Taktfrequenz des Oszillators 6 angesteuert.

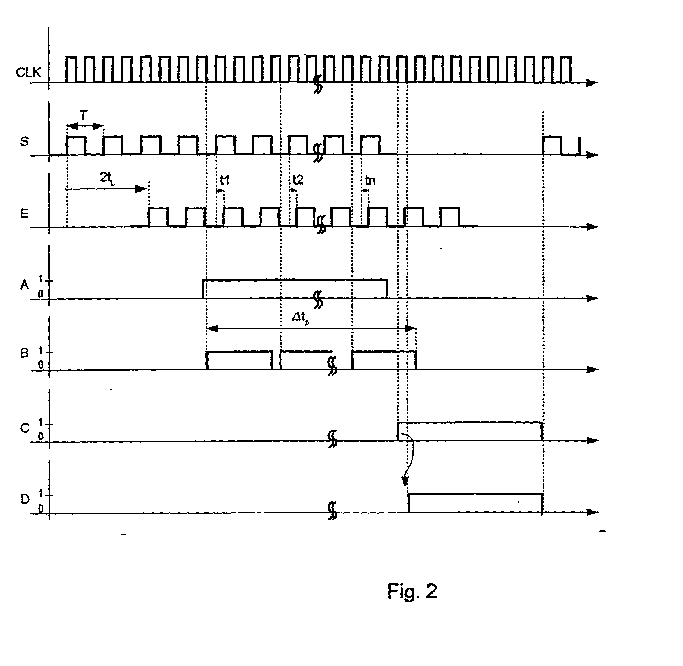

Der Ablauf der Signalauswertung bei der erfindungsgemäßen Vorrichtung ist in Figur 2 dargestellt.

Das vom Oszillator 6 ausgegebene Taktsignal CLK besteht aus einer Folge von Rechteckimpulsen mit der Taktfrequenz 2 f. Dadurch wird der Sender 3 derart angesteuert, daß dieser Sendelichtimpulse 2 mit der Pulsfrequenz f emittiert. Die Sendelichtimpulse 2 sind ebenfalls als Rechteckimpulse ausgebildet. Die entsprechenden Sendesignale S sind in Figur 2 dargestellt. Während einer Periodendauer $T=1/f$ wird dabei jeweils ein Sendelichtimpuls 2 vorgegebener Pulsdauer emittiert, worauf eine Sendepause gleicher Länge folgt.

Die Sendelichtimpulse 2 treffen auf ein Objekt und werden von diesem als Empfangslichtimpulse 4 zurückreflektiert. Die entsprechenden Empfangssignale E sind in Figur 2 dargestellt. Entsprechend der Entfernung X des Objekts zur Vorrichtung beträgt die Laufzeit $t_L$ der Sendelichtimpulse 2 zum Objekt $t_L=X/C$, wobei C die Lichtgeschwindigkeit ist. Dementsprechend beträgt die Laufzeitdifferenz zwischen den Sendelichtimpulsen 2 und den Empfangslichtimpulsen 4 wie in Figur 1 dargestellt $2\,t_L$.

Gemäß dem erfindungsgemäßen Verfahren wird für Laufzeitdifferenzen $2\,t_L$, die größer als die Periodendauer T der Sendelichtimpulse 2 sind, ein erster Teil $t_P$ mittels des Time-to-Digital Converters und ein ein zweiter Teil $t_N$ mittels der Zähler 10, 11 bestimmt. Die Aufteilung erfolgt dabei derart, daß mit den Zählern 10, 11 Laufzeiten erfaßt werden, welche ganzzahlige Vielfache der Periodendauer T sind. Mittels der Phasenmessung im Time-to-Digital Converter wird der Anteil der Laufzeitdifferenz erfaßt, der kleiner oder höchstens gleich der Periodendauer T ist, so daß sich die gesamte Laufzeit $t_L$ der Sendelichtimpulse 2 zum Objekt gemäß der Beziehung

$$t_L = \frac{1}{2}\,(t_P + t_N)$$

ergibt.

Ist die gesamte Laufzeitdifferenz 2 $t_L$ kleiner als T, so erfolgt deren Ermittlung alleine mittels der Phasenmessung.

Wie aus Figur 2 ersichtlich, wird zu Beginn der Auswertung über das Steuersignal A die Steuereinheit 12 aktiviert. Sobald das Steuersignal A den Signalwert 1 annimmt wird über das Steuersignal B der Time-to-Digital Converter aktiviert. Dabei erfolgt die Aktivierung des Time-to-Digital Converters über ein Zeitintervall $\Delta t_P$. Innerhalb des Zeitintervalls $\Delta t_P$ erfolgt die Freigabe der Phasenmessung jeweils für jede zweite Periodendauer T dadurch, daß das Steuersignal B mit der doppelten Periodendauer 2 T periodisch auf den Wert 1 gesetzt wird. Somit wird die Phasenmessung nicht mit jedem sondern nur mit jedem zweiten Sendelichtimpuls 2 gestartet. Dies hat den Vorteil, daß dann Phasenverschiebungen nicht nur im Bereich bis 180° sondern innerhalb 360° erfaßbar sind, wobei der Phasenwinkel 360° der Laufzeitdifferenz $t_P$=T entspricht.

Wie aus Figur 2 weiter ersichtlich ist, erfolgen innerhalb des Zeitintervalls $\Delta t_P$ insgesamt n Phasenmessungen, wobei für jede Phasenmessung jeweils die Laufzeitdifferenz $t_1$, $t_2$ ...$t_n$ zwischen einem Sendelichtimpuls 2 und dem auf diesen folgenden Empfangslichtimpuls 4 erfaßt wird.

Anschließend wird in der Auswerteeinheit 8 durch Bildung des Mittelwerts über die Einzelmessungen die Laufzeitdifferenz $t_P$ gemäß folgender Beziehung berechnet:

$$t_P = (t_1 + t_2 + \ldots\ldots + t_n) \,/\, n$$

Zweckmäßigerweise ist entsprechend der Genauigkeitsanforderungen über die Auswerteeinheit 8 die Länge des Zeitintervalls $\Delta t_P$ einstellbar.

Das Zeitintervall $\Delta t_P$ wird über das Steuersignal C durch die Steuereinheit 12 geschlossen. Sobald das Steuersignal C auf den Wert 1 gesetzt wird, wird durch Betätigen des Schalters 13 der Sender 3 deaktiviert und dabei auch das Steuersignal B nicht mehr aktiviert.

Das Steuersignal C wird für ein Zeitintervall $\Delta t$ aktiviert, wobei hierzu über die Steuereinheit 12 mit der steigenden Flanke des Sendesignals S, also zu Beginn einer Periodendauer T, das Steuersignal C auf den Wert 1 gesetzt wird. Das Steuersignal C bleibt für ein Zeitintervall $\Delta t$ aktiviert, wobei $\Delta t$ ein ganzzahliges Vielfaches der Periodendauer T ist.

Erfindungsgemäß wird innerhalb des Zeitintervalls $\Delta t$ die Laufzeitdifferenz $t_N$ als ganzzahliges Vielfaches $N \cdot T$ der Periodendauer T bestimmt. Die Bestimmung der Laufzeit $t_N$ erfolgt dabei im wesentlichen dadurch, daß innerhalb von $\Delta t$ die Anzahl N der Empfangslichtimpulse 4 ausgewertet wird, welche nach Deaktivierung des Senders 3 noch auf den Empfänger 5 auftreffen.

Da die Sendelichtimpulse 2 mit der Periodendauer T emittiert werden, entspricht der Empfang von N Empfangslichtimpulsen 4 einer Laufzeitdifferenz von $t_N$=N•T.

Beim Zählen der Empfangslichtimpulse 4 innerhalb von $\Delta t$ können insbesondere dann Eindeutigkeitsprobleme auftreten, wenn der erste der N Empfangslichtimpulse 4 nicht vollständig innerhalb des Zeitintervalls $\Delta t$ liegt.

Um eine eindeutige Messung der Laufzeitdifferenz $t_N$ zu erhalten, werden innerhalb des Zeitintervalls $\Delta t$ über die Zähler 10, 11 die steigenden und fallenden Flanken der registrierten Empfangslichtimpulse 4 getrennt gezählt. Die Freigabe der Zähler 10, 11 erfolgt über das Steuersignal D durch die Steuereinheit 12. Dabei werden die Zähler 10, 11 freigegeben, sobald das Steuersignal D aktiviert ist und damit den Wert 1 annimmt. Wie aus Figur 2 ersichtlich ist, wird das Steuersignal D gegenüber dem Steuersignal C um T/4 verzögert aktiviert.

Mit dem ersten Zähler 10 wird die Anzahl $N_1$ der innerhalb von $\Delta t$ registrierten steigenden Flanken der Empfangslichtimpulse 4 gezählt. Mit dem zweiten Zähler 11 wird die Anzahl $N_2$ der innerhalb von $\Delta t$ registrierten fallenden Flanken der Empfangslichtimpulse 4 gezählt.

Erfindungsgemäß wird in Abhängigkeit der im Time-to-Digital Converter ermittelten Phasenverschiebung entweder der Wert $N_1$ oder der Wert $N_2$ als Anzahl N der innerhalb von $\Delta t$ registrierten Empfangslichtimpulse 4 übernommen.

Liegt die Laufzeit $t_P$ im Bereich 0< $t_P \le$ T/2 und damit der Winkel *Phi* der Phasenverschiebung im Bereich 0° < *Phi*≤ 180°, so wird als Wert für N das Maximum aus $N_1$ und $N_2$ übernommen.

Liegt dagegen die Laufzeit $t_P$ im Bereich T/2 < $t_P \le$ T und damit der Winkel *Phi* der Phasenverschiebung im Bereich 180° < *Phi*≤ 360°, so wird als Wert für N das Minimum aus $N_1$ und $N_2$ übernommen.

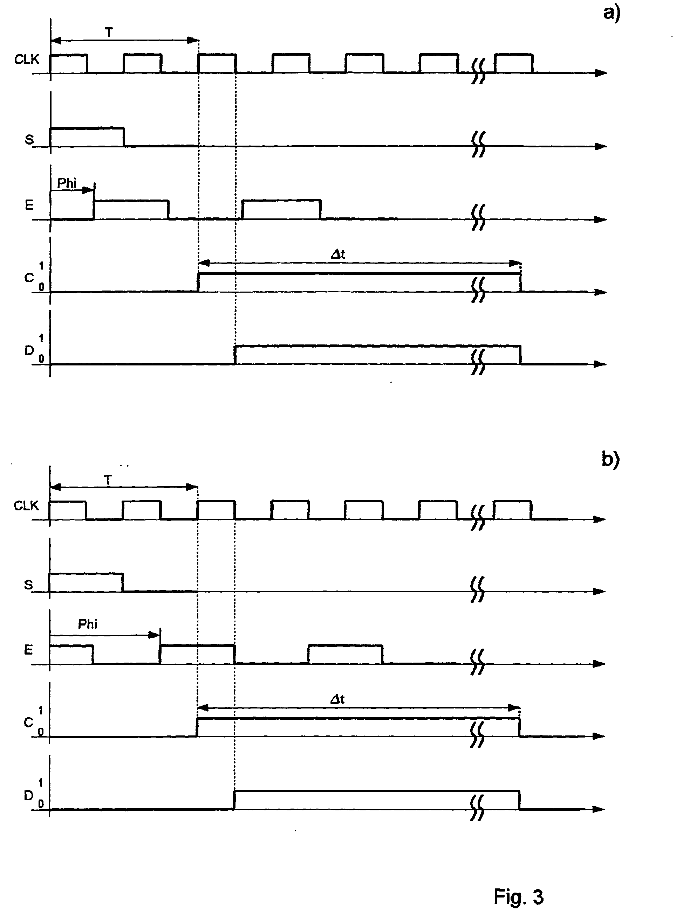

Diese beiden Fallkonstellationen sind in den Figuren 3a und 3b veranschaulicht. In Figur 3a ist der Fall dargestellt, daß die Phasenverschiebung zwischen dem Sendelichtimpuls 2 und einem darauf folgenden ersten Empfangslichtimpuls 4 kleiner als 180° ist. Die Phasenverschiebung beträgt in diesem Fall etwa *Phi* = 144°.

Dementsprechend wird im Time-to-Digital Converter als Laufzeit $t_P$ der Wert $t_P=0,4$ T berechnet.

In Figur 3a ist ein Sendelichtimpuls 2 vor dem Öffnen des Zeitintervalls $\Delta$ t dargestellt. Dieses Zeitintervall $\Delta$ t wird nach Ablauf der Periodendauer T mit der dritten steigenden Flanke des Taktsignals CLK geöffnet, in dem das Steuersignal C auf den Wert 1 gesetzt wird. Da die Phasenverschiebung zwischen dem Sendelichtimpuls 2 und dem ersten Empfangslichtimpuls 4 kleiner als 180° ist, liegt dieser erste Empfangslichtimpuls 4 außerhalb von $\Delta$ t. Auf diesen Empfangslichtimpuls 4 folgt nach Deaktivierung des Senders 3 noch ein zweiter Empfangslichtimpuls 4, der innerhalb von $\Delta$ t liegt. Die Zähler 10, 11 registrieren die steigende und fallende Flanke des Empfangslichtimpulses 4, so daß $N_1=N_2=1$ ist.

Da die im Time-to-Digital Converter ermittelte Phasenverschiebung kleiner als 180° ist, wird das Maximum von $N_2$ und $N_2$ für den Wert von N übernommen. Daher beträgt in diesem Fall N 1.

In der Auswerteeinheit 8 wird daraus die gesamte Laufzeit gemäß der Beziehung

$$t_L = \tfrac{1}{2} /t_P + t_N)$$

bestimmt, so daß für diesen Fall der Wert

$$t_L = \tfrac{1}{2} (0,4 \; T + T) = 0,7 \; T$$

erhalten wird.

Bei dem in Figur 3b dargestellten Fall beträgt die Phasenverschiebung zwischen dem Sendelichtimpuls 2 und dem darauffolgenden Empfangslichtimpuls 4 $Phi = 270°$, und liegt damit oberhalb von 180°. Dementsprechend wird im Time-to-Digital Converter als Laufzeitdifferenz $t_P$ der Wert $t_P=0,75$ T ermittelt.

Analog zum Ausführungsbeispiel gemäß Figur 3a wird nach Ablauf der Periodendauer T nach Aussenden des dargestellten Sendelichtimpulses 2 der Sender 3 deaktiviert. Hierzu wird wiederum das Steuersignal C auf den Wert 1 gesetzt, wodurch auch das Zeitintervall $\Delta$ t geöffnet wird. Das Steuersignal D wird um T/4 gegenüber dem Steuersignal C verzögert aktiviert.

Da die Phasenverschiebung zwischen dem letzten Sendelichtimpuls 2 und dem Empfangslichtimpuls 4 größer als 180° ist, liegt das Ende dieses Empfangslichtimpulses 4 bereits innerhalb von $\Delta$ t. Danach folgt noch ein weiterer Empfangslichtimpuls 4 innerhalb dieses Zeitintervalls.

Da die fallende Flanke des ersten Empfangslichtimpulses 4 gerade mit der Aktivierung der Zähler 10, 11 das Aktivieren des Steuersignals D zusammenfällt, wird vom zweiten Zähler 11 diese fallende Flanke bereits mitgezählt.

Somit ergibt sich für die Werte der Zählerstände nach Schließen von $\Delta$ t zum einen $N_1 = 1$ und $N_2 = 2$. Da

als Phasenverschiebung im Time-to-Digital Converter ein Wert größer als 180° registriert wurde, wird als Wert für N das Minimum von $N_1$ und $N_2$ übernommen, so daß N = 1 ist. Dies bedeutet, daß der teilweise in das Zeitintervall $\Delta$ t fallende Empfangslichtimpuls 4 bei der Berechnung von $t_N$ unberücksichtigt bleibt.

In der Auswerteeinheit 8 wird wiederum die gesamte Lichtlaufzeit gemäß der Beziehung

$$t_L = \tfrac{1}{2} (t_P + t_N)$$

bestimmt, so daß für diesen Fall der Wert

$$t_L = \tfrac{1}{2} (0,75 \; T + T)$$
$$= 0,875 \; T$$

erhalten wird.

Die Werte für den Winkel *Phi* der Phasenverschiebung zur Ermittlung von $t_P$ sowie die Werte von $N_1$, $N_2$ und N zur Ermittlung von $t_N$ in Abhängigkeit der Laufzeit 2 $t_L$ können schematisch aufgetragen werden, wobei die Laufzeit 2 $t_L$ als absoluter Phasenwinkel $Phi_0$ angegeben ist.

Dabei wird der Wert von $N_2$ bei Phasenwinkeln $270°+n\cdot360°$ (n = 0, 1, 2, ...) geändert.

Demgegenüber wird der Wert von $N_1$ bei Phasenwinkeln $Phi_o=90°+n\cdot360°$ (n = 1, 1, 2, ...) geändert.

Aus den Werten von $N_1$ und $N_2$ wird der Wert für N durch Bilden des Minimums oder Maximums von $N_1$ und $N_2$ gewonnen. Die Auswerteregel hierzu wird jeweils bei Phasenwinkeln von $180° + n \cdot 360°$ (n = 0, 1, 2, ...) geändert.

Demzufolge erfolgen die Änderungen von $N_1$, $N_2$ sowie der Auswerteregel jeweils mit dem größtmöglichen Phasenversatz von 90°. Dies ist deshalb besonders vorteilhaft, da damit die einzelnen Bewertungsgrößen Schwankungen unterworfen sein können, ohne daß es dadurch zu Fehlauswertungen käme. Bezugszeichenliste

| | |
|---|---|
| (1) | optischer Distanzsensor |
| (2) | Sendelichtimpuls |
| (3) | Sender |
| (4) | Empfangslichtimpuls |
| (5) | Empfänger |
| (6) | Oszillator |
| (7) | Reflektor |
| (8) | Auswerteeinheit |
| (9) | Meßeinheit |
| (10) | Zähler |
| (11) | Zähler |
| (12) | Steuereinheit |
| (13) | Schalter |

**Patentansprüche**

1. Verfahren zur Entfernungsmessung nach der Lichtlaufzeitmethode mittels eines periodisch mit einer Pulsfrequenz f Sendelichtimpulse emittierenden Senders sowie eines Empfangslichtimpulse empfangenden Empfängers, wobei zur Bestimmung von Lichtlaufzeiten $t_p$ innerhalb eines durch die Periodendauer T = 1/f begrenzten Zeitintervalls die Phasenverschiebung zwischen Sende- und Empfangslichtimpulsen ausgewertet wird, **dadurch gekennzeichnet, daß** zur Bestimmung von Lichtlaufzeiten $t_N$, die größer als die Periodendauer T sind, zusätzlich die Emission von Sendelichtimpulsen (2) für ein vorgegebenes Zeitintervall $\Delta t$ unterbrochen wird, und daß während dieses Zeitintervalls die Anzahl N der auf den Empfänger (5) auftreffenden Empfangslichtimpulse (4) gezählt werden, wobei sich die gesamte Lichtlaufzeit $t_L$ der Sendelichtimpulse (2) zu einem Objekt aus der Summe

$$t_L = ½ \, (t_P + t_N)$$

zusammensetzt, wobei $t_N = N \cdot T$ ist.

2. Verfahren nach Anspruch 1, **dadurch gekennzeichnet, daß** zur Registrierung der Empfangslichtimpulse (4) deren steigende und fallende Flanken separat erfaßt werden, wobei in Abhängigkeit des Betrags von $t_p$ entweder die Anzahl $N_1$ der steigenden Flanken oder die Anzahl $N_2$ der fallenden Flanken als Wert für die Anzahl N der Empfangslichtimpulse (4) übernommen wird.

3. Verfahren nach Anspruch 2, **dadurch gekennzeichnet, daß** die Anzahl N der Empfangslichtimpulse (4) dem Maximum aus $N_1$ und $N_2$ entspricht, falls $t_p$ im Bereich $0 < t_p \leq T/2$ liegt.

4. Verfahren nach einem der Ansprüche 2 oder 3, **dadurch gekennzeichnet, daß** die Anzahl N der Empfangslichtimpulse (4) dem Minimum aus $N_1$ und $N_2$ entspricht, falls $t_p$ im Bereich $T/2 < t_p \leq T$ liegt.

5. Verfahren nach einem der Ansprüche 1 - 4, **dadurch gekennzeichnet, daß** zur Bestimmung der Lichtlaufzeit $t_p$ innerhalb eines Zeitintervalls $\Delta t_p$ für mehrere Sende- (2) und Empfangslichtimpulse (4) die Phasenverschiebung ermittelt wird und daraus der Mittelwert gebildet wird.

6. Verfahren nach einem der Ansprüche 1-5, **dadurch gekennzeichnet, daß** zu Beginn einer Periodendauer T ein Sendelichtimpuls (2) emittiert wird, worauf eine Sendepause folgt.

7. Verfahren nach einem der Ansprüche 1-6, **dadurch gekennzeichnet, daß** das Zeitintervall $\Delta t$ einem ganzzahligen Vielfachen der Periodendauer T entspricht.

8. Verfahren nach Anspruch 7, **dadurch gekennzeichnet, daß** das Zeitintervall $\Delta f$ mit Ablauf einer Sendepause am Ende einer Periodendauer T geöffnet wird.

9. Verfahren nach einem der Ansprüche 1- 8, **dadurch gekennzeichnet, daß** durch Öffnen des Zeitintervalls $\Delta t$ das Zeitintervall $\Delta t_p$ geschlossen wird.

10. Vorrichtung zur Durchführung des Verfahrens nach einem der Ansprüche 1 - 9 mit einem Sendelichtimpulse emittierenden Sender, einem Empfangslichtimpulse empfangenden Empfänger, einer Meßeinheit zur Bestimmung der Phasenverschiebungen zwischen den Sende- und Empfangslichtimpulsen sowie einer an einen Ausgang der Meßeinheit angeschlossenen Auswerteeinheit zur Bestimmung der Entfernung eines Objektes zur Vorrichtung, **dadurch gekennzeichnet, daß** über die Auswerteeinheit (8) der Sender (3) für ein vorgegebenes Zeitintervall $\Delta t$ deaktivierbar ist, daß mittels wenigstens eines Zählers (10, 11) die Anzahl N der auf den Empfänger (5) auftreffenden Empfangslichtimpulse (4) innerhalb des Zeitintervalls $\Delta t$ registrierbar ist, und daß zur Bestimmung der Lichtlaufzeit $t_L$ der Sendelichtimpulse (2) zu einem Objekt in der Auswerteeinheit (8) die Summe

$$t_L = ½ \, (t_P + t_N)$$

gebildet wird, wobei $t_P$ die aus der in der Meßeinheit (9) ermittelten Phasenverschiebung berechnete Lichtlaufzeit ist und $t_N = N \cdot T$ ist.

11. Vorrichtung nach Anspruch 10, **dadurch gekennzeichnet, daß** an die Auswerteeinheit (8) zwei Zähler (10, 11) zur Bestimmung der Anzahl N der Empfangslichtimpulse (4) innerhalb des Zeitintervalls $\Delta t$ angeschlossen sind, wobei mit dem ersten Zähler (10) die steigenden Flanken und mit dem zweiten Zähler (11) die fallenden Flanken der Empfangslichtimpulse (4) erfaßbar sind.

12. Vorrichtung nach Anspruch 11, **dadurch gekennzeichnet, daß** die Zähler (10, 11) über eine an die Auswerteeinheit (8) angeschlossene Steuereinheit (12) aktivierbar sind.

13. Vorrichtung nach einem der Ansprüche 10-12, **dadurch gekennzeichnet, daß** der Sender (3) mittels eines Schalters (13) deaktivierbar ist.

**14.** Vorrichtung nach einem der Ansprüche 12 oder 13, **dadurch gekennzeichnet, daß** der Schalter (13) über die Steuereinheit (12) betätigbar ist.

**15.** Vorrichtung nach einem der Ansprüche 10 - 14, **dadurch gekennzeichnet, daß** die Pulsfrequenz f der Sendelichtimpulse (2) durch einen dem Sender (3) vorgeschalteten Oszillator (6) vorgegeben ist.

**16.** Vorrichtung nach Anspruch 15, **dadurch gekennzeichnet, daß** die Taktfrequenz des im Oszillator (6) erzeugten Taktsignals CLK dem doppelten Wert der Pulsfrequenz f des Senders (3) entspricht.

**17.** Vorrichtung nach einem der Ansprüche 10 -16, **dadurch gekennzeichnet, daß** die Meßeinheit (9) zur Bestimmung der Phasenverschiebungen zwischen Sende- (2) und Empfangslichtimpulsen (4) von einem Time-to-Digital Converter gebildet ist.

**18.** Vorrichtung nach Anspruch 17, **dadurch gekennzeichnet, daß** der Time-to-Digital Converter von der Steuereinheit (12) gesteuert ist.

**Claims**

**1.** Method of distance measurement in accordance with the light transit time method by means of a transmitter periodically emitting transmitted light pulses at a pulse frequency f as well as a receiver receiving received light pulses, wherein the phase displacement between transmitted light pulses and received light pulses is evaluated for determination of transit times $t_P$ within a time interval bounded by the period duration T = 1/f, **characterised in that** for determination of light transit times $t_N$ greater than the period duration T the emission of transmitted light pulses (2) is in addition interrupted for a predetermined time interval $\Delta t$ and that during this time interval the number N of the received light pulses (4) incident on the receiver (5) is counted, wherein the entire light transit time $t_L$ of the transmitted light pulses (2) to an object is made up from the sum

$$t_L = \tfrac{1}{2}\,(t_P + t_N),$$

wherein $t_N = N \cdot T$.

**2.** Method according to claim 1, **characterised in that** for registration of the received light pulses (4) the rising and falling flanks thereof are separately detected, wherein depending on the amount of $t_P$ either the number $N_1$ of the rising flanks or the number $N_2$

of the falling flanks is adopted as value for the number N of the received light pulses (4).

**3.** Method according to claim 2, **characterised in that** the number N of the received light pulses (4) corresponds with the maximum of $N_1$ and $N_2$ if $t_P$ lies in the region $0 < t_P \leq T/2$.

**4.** Method according to one of claims 2 and 3, **characterised in that** the number N of the received light pulses (4) corresponds with the minimum of $N_1$ and $N_2$ if $t_p$ lies in the region $T/2 < t_P \leq T$.

**5.** Method according to any one of claims 1 to 4, **characterised in that** for determination of the light transit time $t_P$ within a time interval $\Delta t_P$ the phase displacement is determined for several transmitted light pulses (2) and received light pulses (4) and the mean value is formed therefrom.

**6.** Method according to any one of claims 1 to 5, **characterised in that** a transmitted light pulse (2) is emitted at the beginning of a period duration T, whereupon a transmission pause follows.

**7.** Method according to any one of claims 1 to 6, **characterised in that** the time interval $\Delta t$ corresponds with an integral multiple of the period duration T.

**8.** Method according to claim 7, **characterised in that** the time interval $\Delta f$ is opened with expiry of a transmission pause at the end of a period duration T.

**9.** Method according to any one of claims 1 to 8, **characterised in that** the time interval $\Delta t_P$ is closed by opening the time interval $\Delta t$.

**10.** Device for carrying out the method according to any one of claims 1 to 9, comprising a transmitter emitting transmitted light pulses, a receiver receiving received light pulses, a measuring unit for determining the phase displacements between the transmitted and received light pulses as well as an evaluating unit, which is connected with an output of the measuring unit, for determining the distance of an object from the device, **characterised in that** the transmitter (3) is deactivatable for a predetermined time interval $\Delta t$ by way of the evaluating unit (8), that the number N of the received light pulses (4) incident on the receiver (5) is registrable within the time interval $\Delta t$ by means of at least one counter (10, 11) and that for determination of the light transit time $t_L$ of the transmitted light pulses (2) to an object the sum

$$t_L = \tfrac{1}{2}\,(t_P + t_N)$$

is formed in the evaluating unit (8), wherein $t_P$ is the light transit time calculated from the phase displacement ascertained in the measuring unit (9) and $t_N$ = N·T.

11. Device according to claim 10, **characterised in that** two counters (10, 11) for determining the number N of the received light pulses (4) within the time interval $\Delta t$ are connected with the evaluating unit (8), wherein the rising flanks of the received light pulses (4) are detectable by the first counter (10) and the falling flanks of the received light pulses (4) are detectable by the second counter (11).

12. Device according to claim 11, **characterised in that** the counters (10, 11) are activatable by way of a control unit (12) connected with the evaluating unit (8).

13. Device according to any one of claims 10 to 12, **characterised in that** transmitter (3) is deactivatable by means of a switch (13).

14. Device according one of claims 12 and 13, **characterised in that** the switch (13) is actuable by way of the control unit (12).

15. Device according to any one of claims 10 to 14, **characterised in that** the pulse frequency f of the transmitted light pulses (2) is preset by an oscillator (6) connected upstream of the transmitter (3).

16. Device according to claim 15, **characterised in that** the clock frequency of the clock signal CLK generated in the oscillator (6) corresponds with twice the value of the pulse frequency f of the transmitter (3).

17. Device according to any one of claims 10 to 16, **characterised in that** the measuring unit (9) for determining the phase displacements between transmitted light pulses (2) and received light pulses (4) is formed by a time-to-digital converter.

18. Device according to claim 17, **characterised in** the time-to-digital converter is controlled by the control unit (12).


**Revendications**

1. Procédé de télémétrie selon la méthode du temps de propagation de la lumière au moyen d'un émetteur émettant périodiquement des impulsions de lumière d'émission à une fréquence d'impulsions f ainsi que d'un récepteur recevant des impulsions de lumière de réception, dans lequel, pour déterminer des temps de propagation de la lumière $t_P$ à l'intérieur d'un intervalle de temps limité par la durée de période T = 1/f, le déphasage entre impulsions de lumière d'émission et de réception est évalué, **caractérisé en ce que** pour déterminer des temps de propagation de la lumière $t_N$ qui sont plus grands que la durée de période T, l'émission d'impulsions de lumière d'émission (2) est en plus interrompue pendant un intervalle de temps prédéfini $\Delta t$, et que, pendant cet intervalle de temps, le nombre N d'impulsions de lumière de réception (4) atteignant le récepteur (5) est compté, le temps total de propagation de la lumière $t_L$ des impulsions de lumière d'émission (2) vers un objet se composant de la somme

$$t_L = \tfrac{1}{2}\,(t_P + t_N),$$

avec $t_N$ = N·T.

2. Procédé selon la revendication 1, **caractérisé en ce que** pour enregistrer les impulsions de lumière de réception (4), leurs flancs montants et descendants sont saisis séparément, étant entendu qu'en fonction de la valeur absolue de $t_P$ soit le nombre $N_1$ de flancs montants, soit le nombre $N_2$ de flancs descendants est repris comme valeur pour le nombre N d'impulsions de lumière de réception (4).

3. Procédé selon la revendication 2, **caractérisé en ce que** le nombre N d'impulsions de lumière de réception (4) correspond au maximum de $N_1$ et $N_2$ si $t_P$ se situe dans la plage $0 < t_P \leq T/2$.

4. Procédé selon l'une des revendications 2 ou 3, **caractérisé en ce que** le nombre N d'impulsions de lumière de réception (4) correspond au minimum de $N_1$ et $N_2$ si $t_P$ se situe dans la plage $T/2 < t_P \leq T$.

5. Procédé selon l'une des revendications 1 à 4, **caractérisé en ce que** pour déterminer le temps de propagation de la lumière $t_P$ à l'intérieur d'un intervalle de temps $\Delta t_P$ pour plusieurs impulsions de lumière d'émission (2) et de réception (4), le déphasage est déterminé et la valeur moyenne formée à partir de celui-ci.

6. Procédé selon l'une des revendications 1 à 5, **caractérisé en ce qu'**au début d'une durée de période T, une impulsion de lumière d'émission (2) est émise, à laquelle succède une pause d'émission.

7. Procédé selon l'une des revendications 1 à 6, **caractérisé en ce que** l'intervalle de temps $\Delta t$ correspond à un multiple entier de la durée de période T.

8. Procédé selon la revendication 7, **caractérisé en**

**ce que** l'intervalle de temps $\Delta f$ est ouvert à l'expiration d'une pause d'émission à la fin d'une durée de période T.

9. Procédé selon l'une des revendications 1 à 8, **caractérisé en ce que** l'intervalle de temps $\Delta t_P$ est fermé par l'ouverture de l'intervalle de temps $\Delta t$.

10. Dispositif pour réaliser le procédé selon l'une des revendications 1 à 9, avec un émetteur émettant des impulsions de lumière d'émission, un récepteur recevant des impulsions de lumière de réception, une unité de mesure pour déterminer les déphasages entre les impulsions de lumière d'émission et de réception ainsi qu'une unité d'évaluation connectée à une sortie de l'unité de mesure pour déterminer la distance d'un objet par rapport au dispositif, **caractérisé en ce que** l'émetteur (3) peut être désactivé pendant un intervalle de temps prédéfini $\Delta t$ par l'intermédiaire de l'unité d'évaluation (8), que le nombre N d'impulsions de lumière de réception (4) atteignant le récepteur (5) à l'intérieur de l'intervalle de temps $\Delta t$ peut être enregistré au moyen d'au moins un compteur (10, 11) et que pour déterminer le temps de propagation de la lumière $t_L$ des impulsions de lumière d'émission (2) vers un objet, la somme

$$t_L = \tfrac{1}{2}\,(t_P + t_N)$$

est formée, dans laquelle $t_P$ est le temps de propagation de la lumière calculé à partir du déphasage déterminé dans l'unité de mesure (9) et $t_N = N \cdot T$.

11. Dispositif selon la revendication 10, **caractérisé en ce que** deux compteurs (10, 11) pour déterminer le nombre N d'impulsions de lumière de réception (4) à l'intérieur de l'intervalle de temps $\Delta t$ sont connectés à l'unité d'évaluation (8), les flancs montants des impulsions de lumière de réception (4) pouvant être saisis avec le premier compteur (10) et les flancs descendants avec le deuxième (11).

12. Dispositif selon la revendication 11, **caractérisé en ce que** les compteurs (10, 11) peuvent être activés par l'intermédiaire d'une unité de commande (12) connectée à l'unité d'évaluation (8).

13. Dispositif selon l'une des revendications 10 à 12, **caractérisé en ce que** l'émetteur (3) peut être désactivé au moyen d'un commutateur (13).

14. Dispositif selon l'une des revendications 12 ou 13, **caractérisé en ce que** le commutateur (13) peut être actionné par l'intermédiaire de l'unité de commande (12).

15. Dispositif selon l'une des revendications 10 à 14, **caractérisé en ce que** la fréquence d'impulsion f des impulsions de lumière d'émission (2) est fixée par un oscillateur (6) placé en amont de l'émetteur (3).

16. Dispositif selon la revendication 15, **caractérisé en ce que** la fréquence d'horloge du signal d'horloge CLK généré dans l'oscillateur (6) correspond à la valeur double de la fréquence d'impulsion f de l'émetteur (3).

17. Dispositif selon l'une des revendications 10 à 16, **caractérisé en ce que** l'unité de mesure (9) pour déterminer les déphasages entre impulsions de lumière d'émission (2) et de réception (4) est formée par un convertisseur temps-numérique.

18. Dispositif selon la revendication 17, **caractérisé en ce que** le convertisseur temps-numérique est commandé par l'unité de commande (12).

**Fig. 1**

Fig. 2

11

a)

b)

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4027990 C1